# EUROPÄISCHE PATENTSCHRIFT

(11) **EP 1 483 146 B1**
(45) Veröffentlichungstag und Bekanntmachung des Hinweises auf die Patenterteilung: **20.09.2006**
(21) Anmeldenummer: 03704651.3
(22) Anmeldetag: 19.02.2003
(51) Int. Cl.: B62D 21/11, B60R 13/08

(54) **FAHRZEUG MIT EINER BRENNKRAFTMASCHINE UND EINEM ACHSTRÄGER**
VEHICLE WITH AN INTERNAL COMBUSTION ENGINE AND AN AXLE CARRIER
VEHICULE DOTE D'UN MOTEUR A COMBUSTION INTERNE ET D'UN FAUX CHASSIS

(30) Priorität: 08.03.2002 DE 10210127
(43) Veröffentlichungstag der Anmeldung: 08.12.2004
(73) Patentinhaber: DaimlerChrysler AG, 70567 Stuttgart (DE)
(72) Erfinder: HÄGELE, Klaus, 73572 Heuchlingen (DE); WAZULA, Fritz, 71134 Aidlingen (DE); WOGH, Erwin, 73230 Kirchheim (DE)
(86) Internationale Anmeldenummer: PCT/EP2003/001647
(87) Internationale Veröffentlichungsnummer: WO 2003/076256

(56) Entgegenhaltungen:
- EP-A- 0 684 159
- EP-A- 1 108 618
- WO-A-02/02318

## Beschreibung

Die Erfindung betrifft ein Fahrzeuges mit einer Brennkraftmaschine gemäß dem Oberbegriff des Patentanspruches 1. Ein derartiges Fahrzeug ist aus der Patentschrift EP-A-1 108 618 bekannt.

Mit der heutigen fortschreitenden Entwicklung immer leistungsfähigerer Brennkraftmaschinen bei Kraftfahrzeugen geht bei deren Betrieb eine massive Zunahme an Motorabwärme, an Geräuschentfaltung sowie an Schwingungsanregungen nebenliegender Bauteile, insbesondere bei Volllast einher. Diese Begleiterscheinungen belasten die an den Motorraum angrenzenden Bereiche stark. Dabei sind die Automobilhersteller durch gesetzliche Bestimmungen gehalten, nicht der Lärmbelästigung durch den Motorbetrieb Vorschub zu leisten. Die Schwingungsanregung kann ihrerseits zu einem Schaben von eng aneinanderliegenden Bauteilen, insbesondere bei Versorgungsleitungen führen, was einen erhöhten Verschleiß dieser Bauteile zur Folge hat.

Der Erfindung liegt die Aufgabe zugrunde, ein gattungsgemäßes Fahrzeug dahingehend weiterzubilden, dass auch sehr leistungsstarke Motoren zum Einsatz gelangen können, ohne daß die Belastungen der an den Motorraum angrenzenden Bereiche des Fahrzeuges und der Außenwelt ungebührlich ansteigen.

Die Aufgabe ist erfindungsgemäß durch die Merkmale des Patentanspruches 1 gelöst.

Dank der Erfindung wird durch die Schutzverkleidung an einem ausladenden den Motor umlaufenden Bauteil wie der Achsträger, dem sogenannten "Integralträger" motornah Geräusche, Abwärme und Schwingungsanregungen, die aus dem Motorbetrieb resultieren, umfassend und ohne erhebliche bauraumeinschränkende Konsequenzen für den Motor, Nebenaggregate und sonstige versorgungsrelevante Bauteile abgedämmt. Aufgrund der Motornähe wird die Ausbreitung der Geräusche und der Abwärme schon frühzeitig gehemmt. Die Außenwelt wird demnach - wenn überhaupt - allenfalls einen geringen Anstieg der Belastungen wahrnehmen. Somit können leistungsstarke Motoren zu Anwendung kommen ohne schädliche Folgen in Kauf nehmen zu müssen. In gleichem Zuge können bei kleineren leistungsschwächeren Motoren, deren Abschallung, Abwärme und Schwingungsanregungen deutlich niedriger ausfallen, infolge der Schutzverkleidung bei anderen Bauteilen Materialien verwendet werden, die keine besonderen Eigenschaften hinsichtlich Wärmefestigkeit oder Verschleißfestigkeit aufweisen müssen und damit kostengünstiger sind. Auch können die umliegenden Bauteile ohne Schädigungsgefahr gegebenenfalls näher zum Motor hin platziert werden, so dass eine kompaktere Bauweise des Gesamttraktes des Fahrzeuges, in dem der Motor angeordnet ist, ermöglicht wird. Darüber hinaus kann aufgrund der Schutzverkleidung der Achsträgerkörper selbst aus Leichtbaumaterialien, wie beispielsweise Aluminium die empfindlich gegenüber hohen Temperaturen sind, unbedenklich hergestellt werden. Im übrigen ist die Erfindung nicht allein auf den besagten Integralträger beschränkt. Bekanntermaßen gibt es auch Fahrzeuge ohne Integralträger, bei denen dessen Funktion Querträger übernehmen. Dahingehend ist auch die erfindungsgemäße Verkleidung dieser Querträger denkbar.

Zweckmäßige Ausgestaltungen der Erfindung können den Unteransprüchen entnommen werden; im übrigen ist die Erfindung anhand zweier in den Zeichnungen dargestellter Ausführungsbeispiele nachfolgend näher erläutert; dabei zeigt:
Fig. 1 in einer Draufsicht einen erfindungsgemäßen Achsträger mit vollverkleideten Längsseiten,
Fig. 2 in einer perspektivischen Ansicht einen Abschnitt des erfindungsgemäßen Achsträgers mit einer Teilverkleidung der Längsseiten des Achsträgers.

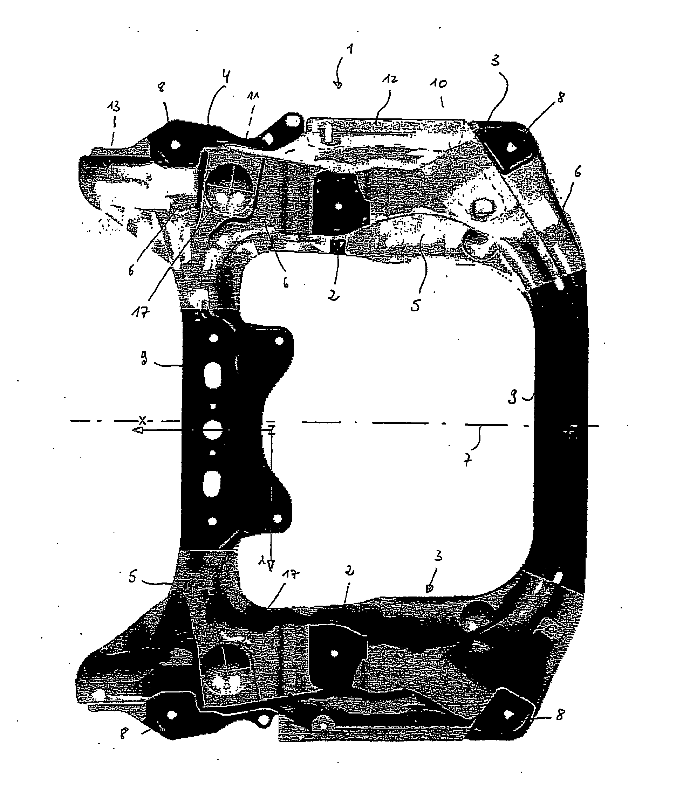

In Fig. 1 ist ein Achsträger 1 eines Fahrzeuges mit einer Brennkraftmaschine dargestellt, welche auf diesem an als Motorlager 2 ausgebildeten Stellen der Längsseiten 3 des Achsträgers 1 gelagert ist. Der Achsträger 1 selbst besteht aus Stahl oder Aluminium und weist auf seiner Oberseite 4 eine Schutzverkleidung 5 auf. In diesem Ausführungsbeispiel ist die Schutzverkleidung mit dem Achsträger 1 an Befestigungsstellen 6 verschraubt. Die Verkleidung 5 kann jedoch auch am Achsträger 1 angeklebt oder angeclipst sein. Die beiden parallel zur Fahrzeuglängsachse 7 sich erstreckenden Längsseiten 3 des Achsträgers 1 sind mittels der Verkleidung 5 mit Ausnahme der Befestigungsstellen 8 für die Befestigung an einem Längsträger des Fahrzeuges und des Motorlagers 2 vollständig abgedeckt. Dies hat zum Vorteil, dass der motorabwärmerelevante Bereich des Achsträgers 1 und die an den Motorraum angrenzenden Bereiche des Fahrzeuges optimal hinsichtlich Motorabschallung, Motorabwärme und Schwingungsanregungen abgeschirmt sind. Sicherlich ist es denkbar, dass anstelle der Vollverkleidung 5 mehrere Einzelverkleidungen für unterschiedliche Bereiche an einzelnen Abdeckstellen des Achsträgers 1 verwandt werden können. Die mit der Vollverkleidung 5 zusammenhängende einstückige Verbindung zwischen den Einzelverkleidungen erbringt den produktionstechnischen Vorteil der Einteiligkeit des zu verbauenden Bauteils, also der Verkleidung 5, wodurch die Anzahl an Herstellungswerkzeugen und die Prozesszeit minimiert wird. Des weiteren entfallen die Vielzahl der bei Einzelverkleidungen vorzusehenden Befestigungsstellen, was zum einen die Ausbildung des Achsträgers 1 und der Verkleidung 5 und deren Montage zum anderen wesentlich vereinfacht. In diesem Zusammenhang wird eine weitere Vereinfachung von der Lösung dargestellt, dass die beiden Verkleidungsabschnitte 5 der Längsseiten 3 miteinander einstückig verbunden sein können, so dass sie ein einziges Bauteil bilden, wobei die Verbindungsabschnitte die Querbrücken 9 des Achsträgers 1, die dessen Längsseiten 3 miteinander verbinden, vollständig abdecken. Damit ist eine minimale Anzahl an Verkleidungsteilen mit einem maximalen Abschirmungseffekt erreicht. Die Verkleidung 5 ist bauraumsparend hautartig der Kontur der Oberseite 4 des Achsträgers 1 entsprechend ausgebildet.

Um eine unkontrollierte Abströmung der durch die Motorabwärme aufgeheizten Luft nach außen, insbesondere zu motorabwärmerelevanten Bereichen des Fahrzeuges zu vermeiden, ist es von besonders großem Vorteil, dass möglichst sämtliche Durchbrüche und Öffnungen des Achsträgers 1 schalldicht und wärmefest abgedeckt sind. Dies sind im einzelnen die Querlenkeröffnung 10 und die Federlenkeröffnung 11 des Achsträgers 1 sowie einen Zwischenraum 12 zwischen dem Längsträger des Fahrzeugs, an dem der Achsträger 1 befestigt ist, und dem Achsträger 1. Des weiteren von besonderer Wichtigkeit ist auch die Abdeckung einer Lagerstelle 13 des Achsträgers 1 für einen Achsstabilisator.

Die Schutzverkleidung 5 besteht vorteilhafterweise aus einem Material mit besonderen wärmedämmenden Eigenschaften. Werkstofftechnisch günstig und in herstellungs- und montagefreundlicher Weise ist das wärmedämmende Material der Verkleidung 5 auch noch mit schallisolierenden Eigenschaften ausgerüstet, so dass bauteile- und bauraumsparend in einem einzigen Verkleidungsteil multifunktionale Eigenschaften verankert sind. Das heißt, das Material muss prinzipiell hart genug und mit geringer Wärmeleitfähigkeit und großer Wärmeaufnahmekapazität ausgebildet sein, um einer ausreichend guten Wärmedämmung zu genügen. Jedoch muss es andererseits so weich sein, dass die Schallisolierung gewährleistet ist. Insbesondere darf die Verkleidung 5 nicht gegen den Achsträger 1 im Betrieb des Fahrzeuges klappern. Materialien, die in besonders günstiger Weise die beiden Eigenschaften in sich vereinen, können unter elastomermodifizierten thermoplastischen Kunststoffen, vorzugsweise Polyamid (beispielsweise PA6/X-HI, EGR, 12-002N nach ISO 1874/1) oder Polyurethan oder in einem elastomermodifizierten Zweikomponentensystem mit Polyurethan gefunden werden. Das Material der Verkleidung 5 kann auch aus zwei miteinander verbundenen Kunststoffen, aufeinanderliegenden Kunststoffschichten oder Kunststoffteilen bestehen, wobei der eine Kunststoff die schallisolierenden und der andere Kunststoff die wärmedämmenden Eigenschaften aufweist. Dabei ist darauf zu achten, dass der Kunststoff mit den wärmedämmenden Eigenschaften oberhalb des Kunststoffes mit den schallisolierenden Eigenschaften angeordnet ist, damit die Eigenschaften am besten zur Geltung kommen. Denkbar ist auch, dass eine Patch-Work-Kombination der beiden Werkstoff zum Tragen kommt, dahingehend, dass an den Stellen des Achsträgers 1, an denen nur Wärmedämmeigenschaften gefragt sind, überwiegend oder ausschließlich der Kunststoff mit besonders guter Wärmedämmung zu Verwendung gelangt, und dass dort, wo die Motorabwärme nicht die schädliche Tragweite besitzt, überwiegend oder ausschließlich der Kunststoff mit hervorragenden Schallisolierungseigenschaften Einsatz findet. Hierbei können die unterschiedlichen Werkstoffe räumlich miteinander innerhalb eines einzigen Verkleidungsteils verbunden sein oder auf separate Verkleidungsteile konzentriert sein.

Es ist natürlich möglich, die Verkleidung 5 als Beschichtung des Achsträgers 1 zu gestalten, was produktionstechnische Vorteile hinsichtlich Schnelligkeit der Herstellung besitzt. Jedoch hat sich in Versuchen gezeigt, dass es für eine besonders gutes und effektives Ergebnis hinsichtlich Schallisolierung und Wärmedämmung von Vorteil ist, wenn die Verkleidung 5 ein eigenständiges Bauteil ist, das mit Ausnahme der Befestigungsstellen 6 der Verkleidung 5 am Achsträger 1 von diesem durch einen Luftspalt 14 beabstandet ist. Die Breite des Luftspaltes 14 liegt vorzugsweise im Bereich von etwa 2mm. Falls es der Bauraum zuläßt, ist es denkbar an der Oberseite der Verkleidung 5 diese konstruktiv mit Luftkammern auszubilden, um so eine weitere Steigerung von Wärmedämmung und Schallisolierung zu erhalten.

Bei besonders guter Wärmeisolierung ist es in vorteiliger Weise denkbar, auf die im Motorraum normalerweise applizierten aus Aluminiumblechen bestehenden Hitzeschilde für die Abgasleitungen verzichten zu können, was Kosten und Bauraum spart. Ein weiterer außerordentlicher Vorteil birgt die aus dem oben genannten Kunststoff bestehende erfindungsgemäße Verkleidung aufgrund ihrer relativ glatten Oberfläche in der Funktion als Scheuerschutz vor der Rauhigkeit und Scharfkantigkeit des Achsträgers 1 gegenüber im oder am Motorraum entlang verlaufenden Weichstoffschläuchen und Leitungen, die beispielsweise Hydrauliköl oder Bremsflüssigkeit führen oder elektrische Versorgungsleitungen bilden. Hierdurch können hitze- und schwingungsanregungsbedingte Bewegungen der Schläuche und Leitungen schadensfrei vonstatten gehen, wobei eine Durchscheuerung und ein daraus resultierender etwaiger Funktionsausfall verhindert wird.

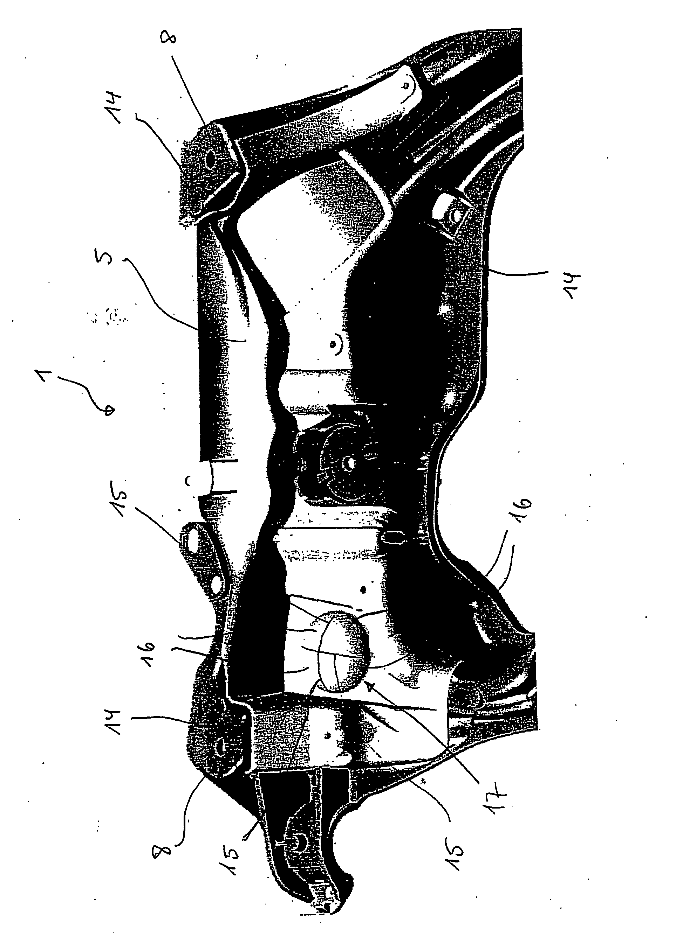

Abweichend von der Version der vollverkleideten Variante des Ausführungsbeispiel gemäß Fig. 1 zeigt Fig. 2 eine Teilverkleidung 5 des Achsträgers 1. Diese Teilverkleidung kann beispielsweise bei Motoren mit geringerer Leistungsstärke benutzt werden, da dort nur eine Abdeckung der wesentlichen abwärme- und schallisolierungsrelevanten Bereiche des Achsträgers 1 vonnöten ist. In der Fig. 2 sieht man den Luftspalt 14 bei den Befestigungsstellen 8 besonders deutlich. Die Anbringung der Verkleidung 5 am Achsträger 1 erfolgt sowohl in der Variante nach Fig. 1 als auch in der nach Fig. 2 vor der Lagerung des Motors auf dem Achsträger 1. Dabei kann sich für die nachträgliche Montage des Motors als schwierig erweisen, aufgrund mangelnder Zugänglichkeit Schraub- und/oder Klemmverbindungen funktionswirksam auszuführen. Um dieses Problem zu lösen, wird die Verkleidung 5 an Stellen abgedeckter Öffnungen 10 bzw. 11 des Achsträgers 1 auf einer kreisförmigen Fläche mit diametralen Schlitzen 15 versehen. Die dabei entstehenden Schlitzblätter 16 sind federelastisch ausgebildet, so dass die Verkleidung 5 zur Montage mit einem Montagewerkzeug in einfacher Weise durchstoßen werden kann und nach der Montage und Zurückziehen des Werkzeuges selbsttätig in die Schließstellung geht ohne ihre Funktionalität bezüglich Wärmedämmung und Schallisolierung zu verlieren. Dieser Rückstelleffekt kann allein durch die konstruktive Maßnahme der Ausbildung einer geschlitzten kuppelförmigen Erhebung 17 über der Kreisfläche erzielt werden. Durch die diametrale Schlitzung werden gleiche Federstärken der Schlitzblätter 16 gewährleistet, so dass es beim Durchführen des Werkzeuges zur Montagestelle und von der Montagestelle weg zu keiner Verkantung oder Verklemmung kommt. Anstatt einer größeren Erhebung 17 können praktischerweise auch zwei kleinere nebeneinanderangeordnete Erhebungen 17 ausgebildet werden.

## Patentansprüche

1. Fahrzeug mit einer Brennkraftmaschine und einem Achsträger, auf dem diese gelagert ist, wobei
der Achsträger (1) auf seiner Oberseite (4) zumindest eine Schutzverkleidung (5) aufweist, **dadurch gekennzeichnet, dass** die Schutzverkleidung (5) auf der Oberseite des Achsträgers angeordnet ist.

2. Fahrzeug nach Anspruch 1,
**dadurch gekennzeichnet,**
**dass** die Verkleidung (5) aus einem mit wärmedämmenden Eigenschaften versehenen Material besteht.

3. Fahrzeug nach einem der Ansprüche 1 oder 2,
**dadurch gekennzeichnet,**
**dass** das Material der Verkleidung (5) mit schallisolierenden Eigenschaften ausgerüstet ist.

4. Fahrzeug nach einem der Ansprüche 1 bis 3,
**dadurch gekennzeichnet,**
**dass** das Material der Verkleidung (5) aus einem elastomermodifizierten thermoplastischen Kunststoff, vorzugsweise Polyamid oder Polyurethan besteht.

5. Fahrzeug nach einem der Ansprüche 1 bis 3,
**dadurch gekennzeichnet,**
**dass** das Material der Verkleidung (5) aus zwei miteinander verbundenen Kunststoffen besteht, wobei der eine Kunststoff schallisolierende und der andere Kunststoff wärmedämmende Eigenschaften aufweist.

6. Fahrzeug nach Anspruch 5,
**dadurch gekennzeichnet,**
**dass** der Kunststoff mit den wärmedämmenden Eigenschaften oberhalb des Kunststoffes mit den schallisolierenden Eigenschaften angeordnet ist.

7. Fahrzeug nach einem der Ansprüche 1 bis 6,
**dadurch gekennzeichnet,**
**dass** die Verkleidung (5) eine Querlenkeröffnung (10) des Achsträgers abdeckt.

8. Fahrzeug nach einem der Ansprüche 1 bis 7,
**dadurch gekennzeichnet,**
**dass** die Verkleidung (5) eine Federlenkeröffnung (11) des Achsträgers (1) abdeckt.

9. Fahrzeug nach einem der Ansprüche 1 bis 8,
**dadurch gekennzeichnet,**
**dass** die Verkleidung (5) einen Zwischenraum (12) zwischen dem Achsträger (1) und einem Längsträger des Fahrzeugs, an dem der Achsträger (1) befestigt ist, abdeckt.

10. Fahrzeug nach einem der Ansprüche 1 bis 9,
**dadurch gekennzeichnet,**
**dass** die Verkleidung eine Lagerstelle (13) des Achsträgers (1) für einen Achsstabilisator abdeckt.

11. Fahrzeug nach einem der Ansprüche 1 bis 10,
**dadurch gekennzeichnet,**
**dass** die Verkleidungen (5) der einzelnen Abdeckstellen einstückig miteinander verbunden sind.

12. Fahrzeug nach einem der Ansprüche 1 bis 11,
**dadurch gekennzeichnet,**
**dass** die beiden parallel zur Fahrzeuglängsachse sich erstreckenden Längsseiten (3) des Achsträgers (1) mittels der Verkleidung (5) mit Ausnahme der Befestigungsstellen (8) für die Befestigung am Längsträger und des Motorlagers (2) vollständig abgedeckt sind.

13. Fahrzeug nach Anspruch 12,
**dadurch gekennzeichnet,**
**dass** die beiden die Längsseiten (3) des Achsträgers (1) abdeckenden Verkleidungsabschnitte miteinander derart verbunden sind, dass sie ein einziges Bauteil bilden, wobei die Verbindungsabschnitte die Querbrücken (9) des Achsträgers (1), die dessen Längsseiten (3) miteinander verbinden, vollständig abdecken.

14. Fahrzeug nach einem der Ansprüche 1 bis 13,
**dadurch gekennzeichnet,**
**dass** die Verkleidung (5) mit Ausnahme der Befestigungsstellen (6) der Verkleidung (5) am Achsträger (1) von diesem durch einen Luftspalt (14) beabstandet ist.

15. Fahrzeug nach einem der Ansprüche 1 bis 13,
**dadurch gekennzeichnet,**
**dass** die Verkleidung (5) durch eine Beschichtung des Achsträgers (1) gebildet ist.

16. Fahrzeug nach einem der Ansprüche 1 bis 15,
**dadurch gekennzeichnet,**
**dass** die Verkleidung (5) hautartig der Kontur der Oberseite (4) des Achsträgers (1) entsprechend ausgebildet ist.

17. Fahrzeug nach einem der Ansprüche 1 bis 15,
**dadurch gekennzeichnet,**
**dass** an der Oberseite der Verkleidung (5) Luftkammern ausgebildet sind.

18. Fahrzeug nach einem der Ansprüche 1 bis 17,
**dadurch gekennzeichnet,**
**dass** die Verkleidung (5) an Stellen abgedeckter Öffnungen (10,11) des Achsträgers (1) auf einer kreisförmigen Fläche mit diametralen Schlitzen (15) versehen ist, wobei die dabei entstehenden Schlitzblätter (16) federelastisch ausgebildet sind.

## Claims

1. Vehicle having an internal combustion engine and an axle carrier on which this is mounted, with the axle carrier (1) having on its top face (4) at least one protective lining (5), **characterized in that** the protective lining (5) is arranged on the top face of the axle carrier.

2. Vehicle according to Claim 1, **characterized in that** the lining (5) consists of a material provided with heat-insulating properties.

3. Vehicle according to either of Claims 1 and 2, **characterized in that** the material of the lining (5) is equipped with sound-insulating properties.

4. Vehicle according to one of Claims 1 to 3, **characterized in that** the material of the lining (5) consists of an elastomer-modified thermoplastic, preferably polyamide or polyurethane.

5. Vehicle according to one of Claims 1 to 3, **characterized in that** the material of the lining (5) consists of two interconnected plastics, the one plastic exhibiting sound-insulating properties and the other plastic exhibiting heat-insulating properties.

6. Vehicle according to Claim 5, **characterized in that** the plastic having the heat-insulating properties is disposed above the plastic having the sound-insulating properties.

7. Vehicle according to one of Claims 1 to 6, **characterized in that** the lining (5) covers a track control arm opening (10) in the axle carrier.

8. Vehicle according to one of Claims 1 to 7, **characterized in that** the lining (5) covers a spring control arm opening (11) in the axle carrier (1).

9. Vehicle according to one of Claims 1 to 8, **characterized in that** the lining (5) covers an interspace (12) between the axle carrier (1) and a longitudinal member of the vehicle, to which the axle carrier (1) is fastened.

10. Vehicle according to one of Claims 1 to 9, **characterized in that** the lining covers a bearing (13) of the axle carrier (1) for an axle stabilizer.

11. Vehicle according to one of Claims 1 to 10, **characterized in that** the linings (5) of the individual cover points are joined together in one piece.

12. Vehicle according to one of Claims 1 to 11, **characterized in that** the two longitudinal sides (3) of the axle carrier (1), extending parallel to the vehicle longitudinal axis, are fully covered by means of the lining (5), with the exception of the fastening points (8), for fastening to the longitudinal member, and the engine mount (2).

13. Vehicle according to Claim 12, **characterized in that** the two lining portions covering the longitudinal sides (3) of the axle carrier (1) are joined together in such a way that they form a single component, the connecting portions fully covering the transverse bridges (9) of the axle carrier (1), which join its longitudinal sides (3).

14. Vehicle according to one of Claims 1 to 13, **characterized in that** the lining (5), with the exception of the fastening points (6) for fastening the lining (5) to the axle carrier (1), is distanced from the latter by an air gap (14).

15. Vehicle according to one of Claims 1 to 13, **characterized in that** the lining (5) is formed by a coating of the axle carrier (1).

16. Vehicle according to one of Claims 1 to 15, **characterized in that** the lining (5) is of skin-like configuration conforming to the contour of the top face (4) of the axle carrier (1).

17. Vehicle according to one of Claims 1 to 15, **characterized in that** air chambers are formed on the top face of the lining (5).

18. Vehicle according to one of Claims 1 to 17, **characterized in that** at points of covered openings (10, 11) in the axle carrier (1), on a circular surface, the lining (5) is provided with diametrical slots (15), the slotted leaves (16) which are hereupon formed being of resiliently elastic configuration.

## Revendications

1. Véhicule équipé d'un moteur à combustion interne et d'un support d'essieu qui supporte le moteur, le support d'essieu (1) présentant sur son côté supérieur (4) au moins un habillage de protection (5), **caractérisé en ce que** l'habillage de protection (5) est disposé sur le côté supérieur du support d'essieu.

2. Véhicule selon la revendication 1, **caractérisé en ce que** l'habillage (5) est à base d'un matériau doté de propriétés thermo-isolantes.

3. Véhicule selon l'une quelconque des revendications 1 ou 2, **caractérisé en ce que** le matériau de l'habillage (5) est doté de propriétés insonorisantes.

4. Véhicule selon l'une quelconque des revendications 1 à 3, **caractérisé en ce que** le matériau de l'habillage (5) est à base d'un plastique thermoplastique modifié par élastomère, de préférence du polyamide ou du polyuréthane.

5. Véhicule selon l'une quelconque des revendications 1 à 3, **caractérisé en ce que** le matériau de l'habillage (5) est à base de plastiques reliés entre eux, l'un des plastiques présentant des propriétés insonorisantes et l'autre plastique des propriétés thermo-isolantes.

6. Véhicule selon la revendication 5, **caractérisé en ce que** le plastique présentant les propriétés thermo-isolantes est disposé au-dessus du plastique présentant les propriétés insonorisantes.

7. Véhicule selon l'une quelconque des revendications 1 à 6, **caractérisé en ce que** l'habillage (5) recouvre une ouverture du bras oscillant transversal (10) du support d'essieu.

8. Véhicule selon l'une quelconque des revendications 1 à 7, **caractérisé en ce que** l'habillage (5) recouvre une ouverture du bras oscillant à ressort (11) du support d'essieu (1).

9. Véhicule selon l'une quelconque des revendications 1 à 8, **caractérisé en ce que** l'habillage (5) recouvre un espace intermédiaire (12) entre le support d'essieu (1) et un longeron du véhicule, sur lequel est fixé le support d'essieu (1).

10. Véhicule selon l'une quelconque des revendications 1 à 9, **caractérisé en ce que** l'habillage recouvre un point de palier (13) du support d'essieu (1) pour un stabilisateur d'essieu.

11. Véhicule selon l'une quelconque des revendications 1 à 10, **caractérisé en ce que** les habillages (5) des différents points de recouvrement sont reliés entre eux d'une seule pièce.

12. Véhicule selon l'une quelconque des revendications 1 à 11, **caractérisé en ce que** les deux côtés longitudinaux (3), s'étendant parallèlement à l'axe longitudinal du véhicule, du support d'essieu (1) sont entièrement recouverts au moyen de l'habillage (5) à l'exception des points de fixation (8) pour la fixation sur le longeron et du support de moteur (2).

13. Véhicule selon la revendication 12, **caractérisé en ce que** les deux sections d'habillage recouvrant les côtés longitudinaux (3) du support d'essieu (1) sont reliées entre elles de telle sorte qu'elles forment un composant unique, les sections de liaison recouvrant complètement les ponts transversaux (9) du support d'essieu (1), qui relient ses côtés longitudinaux (3) entre eux.

14. Véhicule selon l'une quelconque des revendications 1 à 13, **caractérisé en ce que** l'habillage (5), à l'exception des points de fixation (6) de l'habillage (5), est disposé sur le support d'essieu (1) et espacé de celui-ci par une fente d'aération (14).

15. Véhicule selon l'une quelconque des revendications 1 à 13, **caractérisé en ce que** l'habillage (5) est formé par un revêtement du support d'essieu (1).

16. Véhicule selon l'une quelconque des revendications 1 à 15, **caractérisé en ce que** l'habillage (5) est réalisé à la façon d'une peau en fonction du contour du côté supérieur (4) du support d'essieu (1).

17. Véhicule selon l'une quelconque des revendications 1 à 15, **caractérisé en ce que** des chambres d'air sont réalisées sur le côté supérieur de l'habillage (5).

18. Véhicule selon l'une quelconque des revendications 1 à 17, **caractérisé en ce que** l'habillage (5) est doté de fentes (15) diamétrales en des emplacements d'ouvertures (10, 11) masqués du support d'essieu (1) sur une surface circulaire, les lames à fentes (16) formées à cette occasion étant réalisées élastiquement comme un ressort.
